# EUROPEAN PATENT SPECIFICATION

(11) **EP 2 245 855 B1**
(45) Date of publication and mention of the grant of the patent: **06.01.2016**
(21) Application number: 08705341.9
(22) Date of filing: 22.01.2008
(51) Int. Cl.: H04N 21/63, H04N 21/643, H04N 21/61, H04L 29/06

(54) **COMMUNICATION UNIT AND A METHOD FOR PROVIDING ACCESS TO AN IPTV NETWORK**
KOMMUNIKATIONSEINHEIT UND VERFAHREN ZUR BEREITSTELLUNG VON ZUGANG ZU EINEM IPTV-NETZWERK
UNITÉ DE COMMUNICATION ET PROCÉDÉ DE FOURNITURE D'ACCÈS À UN RÉSEAU IPTV

(43) Date of publication of application: 03.11.2010
(73) Proprietor: Telefonaktiebolaget L M Ericsson (publ), 164 83 Stockholm (SE)
(72) Inventor: KÖLHI, Johan, S-185 39 Vaxholm (SE); ZHAO, Wei, S-169 74 Solna (SE)
(74) Representative: Zacco Sweden AB
(86) International application number: PCT/SE2008/050069
(87) International publication number: WO 2009/093939

(56) References cited:
- EP-A1- 1 895 777
- WO-A1-2007/131548
- US-A1- 2005 226 170
- US-A1- 2006 259 927
- US-A1- 2007 113 258
- US-A1- 2007 237 330
- US-A1- 2008 016 247
- US-A1- 2008 025 306
- US-B1- 7 310 730
- XIAO Y ET AL.: 'Internet Protocol Television (IPTV): The Killer Application for the Next-Generation Internet' IEEE COMMUNICATIONS MAGAZINE vol. 45, no. 11, 01 November 2007, pages 126 - 134, XP011196606

## Description

### TECHNICAL FIELD

The present invention relates to the field of providing remote access to an IPTV network.

### BACKGROUND

Most TV-channels today are still only distributed locally. However, people of today tend to live globally. Many people live abroad at least for shorter time periods of their lives. Expatriate workers, immigrants and refugees is an increasing group, that would like to watch their local home channels even if they happen to live in another part of the world.

IPTV (Internet Protocol TV) is typically supplied by a service provider using a closed network infrastructure associated to a specific operator. Therefore, the available IPTV infrastructures are only locally available. The delivery of TV content over the public Internet is at least so far limited to a few major networks and a limited number of channels.

The most common solution for receiving local television channels from other parts of the world is therefore still to use satellite dishes. However, this solution requires satellite coverage, which is not always available. The installation of satellite dishes in likely to involve hassle. When the satellite dish has been successfully installed, the user still has to deal with cryptos and set top boxes which might not be supported in the country in question.

US 2007/237330 discloses a solution for delivering subscribed content to a subscriber at a roaming location remote from a home location of the user.

### SUMMARY

One object of the present invention is to obviate at least some of the above disadvantages and provide an improved way of remote access to locally transmitted multicast television channels.

This problem is addressed by a communication unit for communication of IPTV channels to at least one user unit. The communication unit comprises a receiver arranged to receive a set of IPTV channels, and a distribution channel set up unit arranged to set up one separate distribution channel to each user unit so as to distribute one of the IPTV channels in said set of IPTV channels over each distribution channel. The distribution to the users is provided by means of any network, herein referred to as a visited network.

One advantage with the present invention is that it uses the existing home IPTV multicast infrastructure and extends it to new and uncovered geographical areas. It does not involve any requirements on the underlying visited network, as long as the bandwidth is adequate. The implementation is believed to be very cost-effective and requires no specialized hardware in the transponder server.

With the present solution, live IPTV transmission can be achieved. The present solution also enables personalized TV offerings with video-on-demand style access.

In one embodiment, the communication unit comprises a control unit arranged to receive one selector signal from each user unit. The selector signal indicates a chosen IPTV channel. The control unit controls further the distribution channel set up unit so as to distribute the chosen IPTV channel indicated by the respective selector signal to each user unit.

In one example, the control unit is arranged to determine a communication mode over each distribution channel based on one or a plurality of preset criteria. The present criteria comprises for example the chosen IPTV channel, the IPTV programme currently associated to the chosen IPTV channel, and/or the available bandwidth over the distribution channel.

The distribution channel set up unit is arranged to set up distribution channels to the user units so as to provide a separate connection to each user unit. Each connection accordingly has one endpoint in the communication unit and another endpoint in the respective user unit. The distribution channel set up unit is in one example arranged to set up distribution channels in a unicast mode of communication and or in a Peer-to-Peer mode of communication.

In one example, the communication unit comprises a memory unit arranged to store at least some television programs of the set of IPTV channels for view on demand.

The present invention also relates to an IPTV system comprising the communication unit above,

a first IPTV network arranged to export a set of IPTV channels of said first IPTV network to the communication unit by means of a communication line, and

at least one remote user unit arranged to transmit a selector signal to said communication unit so as to select one IPTV channel from said set of IPTV channels.

The communication unit is arranged to set up a distribution channel to said remote user unit based on the information in the selector signal. The distribution channels are for example provided over a second network, such as a broadband data network.

The communication line is for example provided over the Internet. The communication line can be encrypted.

The present invention also relates to a method for providing remote access to a first IPTV network, comprising the steps of exporting a set of IPTV channels from said first IPTV network to a communication unit; setting up a distribution channel between said communication unit and each remote user unit, in a group of remote user units and distributing one chosen television program of the exported set of IPTV channels to the remote user unit.

In one embodiment, the method comprises the steps of communicating information from the communication unit to the first IPTV network, said information relating to the distribution of television programs to the remote users, and adapting the characteristics of said set of IPTV channels before export to the communication unit in accordance with the information related to the distribution of television programs.

The information relating to the distribution of television programs to the remote users comprises for example information denoting IPTV channels which are currently not distributed to the remote user units (or the memory). The adapting of the characteristics involves then removing said denoted IPTV channels from the set of IPTV channels before export.

The information relating to the distribution of television programs to the remote users can also comprise for example the available bandwidth of the distribution channels. The step of communicating information then involves communicating the determined available bandwidth(s). Accordingly, the step of adapting the set of IPTV channels involves adapting the bandwidth(s) of the exported IPTV channels in accordance with the communicated available bandwidth(s).

Further, the present invention relates to a computer programme comprising a programme code for performing steps of receiving a set of IPTV channels, and setting up one separate distribution channel to at least one user unit so as to distribute one of the IPTV channels in said set of IPTV channels over each distribution channel, when said computer programme is run on a computer. A computer programme product comprises a program code according to the above stored on a, by a computer readable, media.

### BRIEF DESCRIPTION OF THE DRAWINGS

Fig 1 is a block scheme showing an overview of an IPTV distribution system according to one example of the present invention.
Fig 2 is a block scheme showing one example of a remote user unit in the IPTV distribution system in Fig 1.
Fig 3 is a block scheme showing one example of transponder server in the IPTV distribution system in Fig 1.
Fig 4 is a flow chart showing a general principle for providing remote access to a first IPTV network.
Fig 5 is a flow chart showing a general principle for providing distribution to remote users of the first IPTV network.
Fig 6 is a flow chart showing one example of steps taken in communication between the first IPTV network and the transponder server of Fig 2.
Fig 7 is a flow chart showing a second example of steps taken in communication between the first IPTV network and the transponder server of Fig 2.

### DETAILED DESCRIPTION

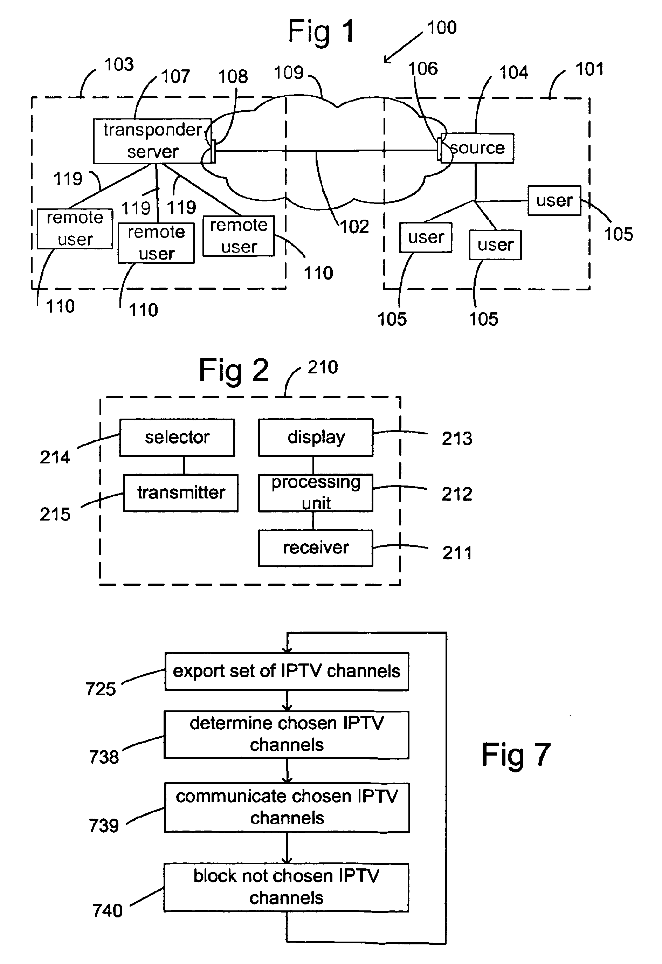

In fig 1, an IPTV distribution system 100 is arranged to distribute IPTV to a number of remote users by means of a first network 101, a communication tunnel 102 and a second network 103. The first network 101 is herein referred to as a home network: The home network is a broadband network associated to a given network operator. The home network comprises at least one source unit 104 and a number of user units 105. The source unit 104 is arranged to multicast IPTV to a plurality of IPTV channels to the users 105 within the home network organized by the operator. The user units 105 having said operator are arranged to receive one such multi-casted IPTV channel offered by said operator and selected by the user of said user unit. The network operator of the home network 101 is characteristically operating within a limited area, such as a country or a part of a country. Accordingly, the home network can be accessed within a limited area, such as a country or a part of a country.

The home network 101 comprises a node (not shown) arranged to function as a first tunnel endpoint 106 for the communication tunnel 102. The node is controlled by the network operator. The node is in the shown non restrictive example provided in the source unit 104. The node is arranged to select and transmit a set of IPTV channels provided by the operator of the home network over the communication tunnel 102. The set of IPTV channels to be selected and transmitted is in one example determined by the operator of the home network. In one example, the node is arranged to select a set that comprises all IPTV channels provided by the operator. In an alternative example, the node is arranged to select a set comprising a subset of IPTV channels provided by the operator. The set of IPTV channels can be either pre-defined or selected on an on-demand basis. This will be discussed more in detail later. The transmission of a set of IPTV channels over the communication tunnel 102 can be viewed as an export of the set of IPTV channels outside the home network. In one example, the image and audio information related to each IPTV channel is transmitted with full quality. In an alternative example, the information is compressed before transmission. This will be discussed more in detail below. The communication tunnel 102 is in one example provided over a high speed link (e.g. a rented high speed link). In an alternative example, the communication tunnel 102 is provided over the Internet 109, such as by means of a VPN (Virtual Private Network)-style connection. The communication tunnel 102 can be encrypted. The encryption is for example provided by means of an IPsec (IP security) protocol.

A communication unit, in the example of the following description provided in the form of a transponder server 107 provides a second endpoint 108 of the communication tunnel 102. The transponder server 107 is characteristically located in an area outside reach for the home network 101. The transponder server 107 has access to the second network 103, herein described as a visited network. The transponder server 107 has for example access to the visited network 103 by means of a subscription. The visited network 103 is for example a local broadband network associated to a local operator. The visited network is for example a local broadband data network. Characteristically, the transponder server 107 is arranged within a geographical area covered by said visited network 103 and served by said local operator. In one example, the transponder server 107 is located in a data centre, such as a hosting centre or partner operator premises.

The transponder server 107 is connected to one or a plurality of user units 110 by means of the visited network 103. Accordingly, the visited network 103 comprises, or is connected to the transponder server 107. The transponder server 107 is arranged to provide remote access to the exported set of local IPTV channels of the home network 101 for a number of user units 110 of the visited network. Accordingly, the transponder server 107 serves as an extension of the home IPTV network 101 for the exported set of IPTV channels. The user units 110 of the visited network will hereinafter be referred to as remote user units 110.

The remote user units 110 have access to the visited network by means of a subscription of any type. The distribution of chosen IPTV channels from the transponder server 107 to the remote user units 110 is provided by means of distribution channels 119 in the visited network 103. One separate distribution channel 119 is provided to each remote user unit, which has chosen an IPTV channel from the transponder server 107. The distribution to each remote user unit 110 is in one example performed over the respective distribution channel by means of a unicast stream. In an alternative example, the distribution of one IP channel selected by the remote user is provided over the respective distribution channel by means of Peer to Peer (P2P).The unicast solution is somewhat more expensive from a bandwidth point of view. P2P on the other hand, is slower and associated to a "less live style" transmission.

In Fig 2, each remote user unit 210 comprises a receiver 211 arranged to receive an incoming data stream over one distribution channel 119, said data stream comprising data for one IPTV channel chosen by the remote user. The received data is arranged to be processed by a processing unit 212 into a format suitable for display. The processed display data is thereafter fed to a display unit 213 for display. Each remote user unit 210 comprises further a selector 214. The user can choose one of the IPTV channels exported to the transponder server by means of said selector 214. A transmitter 215 is arranged to transmit said selector information related to the chosen IPTV channel to the transponder server 107 by means of the visited network 103. Each remote user unit 210 is for example formed as a computer unit with a computer screen, a mobile telephone, a set-up-box, a television set or any other type of display unit arranged to receive and display IPTV signals. The term set-up-box refers to a unit capable of receiving IPTV signals and decoding said signals so as to be suitable for reception by an analog TV.

In one example, the remote user units 210 have means for authentication of the user. In one example, the authentication is provided by means of logging into a web page, using single sign-on passwords and other techniques. The authentication can be provided on an application level, i.e. the authentication is performed by the IPTV application used.

The remote user units have in one example access to more than one transponder server 107. The remote users may then have means (not shown) for deciding which transponder to use. One criterion for choosing transponder server is for example the distance to the respective transponder server. Another example of a criterion is the load on the respective transponder server. Yet another example of a criterion is the contents (available set of IPTV channels) of the respective transponder server.

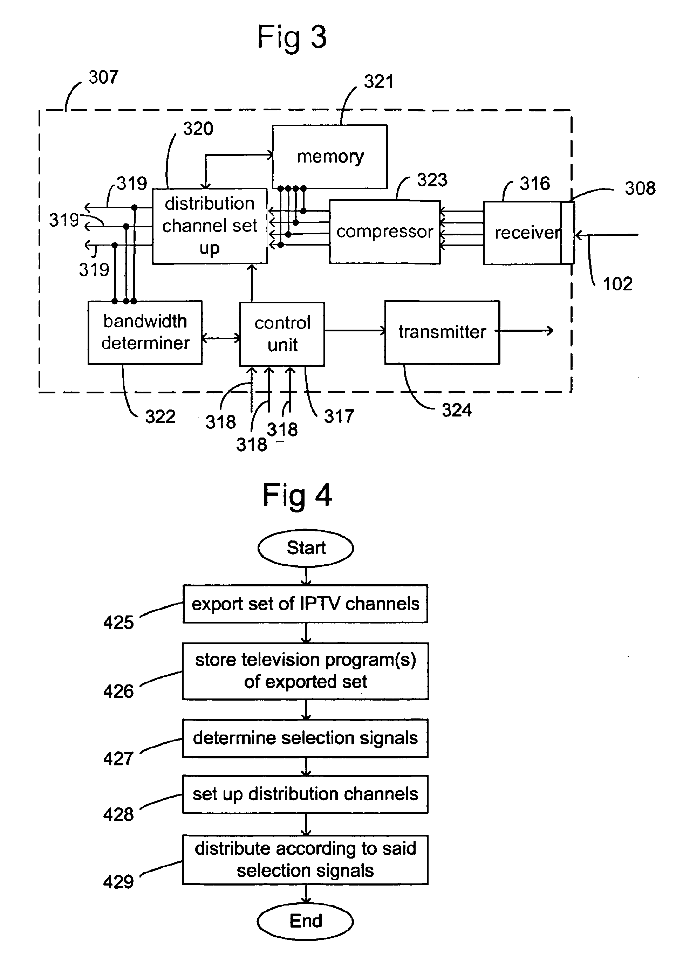

In Fig 3, the transponder server 307 comprises, at the second tunnel endpoint 308, a receiver 316. The receiver 316 is arranged to separate the incoming data stream into a plurality of data streams, one for each IPTV channel transmitted over the communication tunnel 102.

A control unit 317 is arranged to receive selector signals via selector signal channels 318 from the selectors 214 of the remote user units 210. Each selector signal is associated to the remote user unit 110 from which it originates. Further, each selector signal comprises information indicating which IPTV channel the user of the associated remote user unit 110 has chosen. Based on the information in the received selector signals, the control unit 317 is arranged to control a distribution channel set up unit 320. The distribution channel set up unit 320 is further connected to the receiver 316 so as to receive the received and separated IPTV channel signal. The distribution channel set up unit 320 is arranged to set up the distribution channels 319 to the remote user units 110 under control from the control unit 317 and based on the received selector signals. The distribution channel set up unit 320 is further arranged to feed the separated IPTV signal information related each selected IPTV channel to the respective distribution channel 319. As was mentioned above, the distribution channels 319 can be set up using either one of at least two types of distribution modes, namely a unicast mode and a Peer to Peer (P2P) mode.

In one example, the control unit 317 is arranged to control set up of one distribution channel 319 upon reception of a selector signal indicating that the user of one of the remote user units 110 has chosen an IPTV channel. The distribution channel 319 is maintained as long as the selector signal indicates that the remote user has not altered IPTV channel or switched off the remote user unit 110. The choice for set-up mode for the distribution channel 319 is based on one or a plurality of preset criteria. In one example, the choice of distribution mode depends on the popularity of an IPTV channel, i.e. it depends on how many remote users are viewing the same IPTV channel at the same time. Accordingly, distribution in the Peer-to-Peer mode can be provided for those IPTV channels viewed by a plurality of remote user. Distribution in the unistream mode is more suitable for distribution to only a few or a single remote user unit. In an alternative or complementary example, the choice of distribution mode depends on how close to live the transmission should be. Accordingly, distribution in the unicast mode is in one example provided when small delays in the distribution are desired. In one example, the control unit 317 is arranged to set up distribution channels 319 for one or a plurality of pre-selected IPTV channels by means of a unicast stream and one or a plurality of other pre-selected IPTV channels by means of Peer-to-Peer. In a refined example, the control unit 317 is arranged to set up distribution channels 319 for one or a plurality of pre-selected television programs in the unicast mode and one or a plurality of other pre-selected television programs in the of Peer-to-Peer mode.

A memory unit 321 is connected to the receiver 316 and arranged to store the IPTV signals related to one or a plurality of the received and separated IPTV channels. Thereby personalized TV can be provided in the form of video-on-demand. In order to enable selection of a certain television program for the remote users, the IPTV channel information stored in the memory 321 comprises program information associated to the stored programs. In one example, the program information comprises the name or a code associated to the chosen television program, and/or a time of "broadcast". The selector signal comprises in accordance with this example, the program information identifying the chosen television program. In one example, the selector signal comprises the program information in addition to the IPTV channel information and in another example, the selector signal comprises the program information instead of the IPTV channel information, wherein the IPTV information is inherently included in the program information. The selector 214 of the remote user unit may in accordance with this example comprise a table menu system or the like, by means of which a stored television program can be chosen. The control unit 317 is then arranged to control the distribution channel set up unit 320 so as to set up the distribution channel 319 and to feed the IPTV signals stored in the memory unit 321 of an IPTV program chosen by means of the selector 214 at a chosen point in time chosen by means of the selector 214 to the set up the distribution channel. In one example, Peer-to-Peer is used as a distribution mode when distributing data from the memory 321 over the distribution channel 319.

In the shown example, the transponder server 307 comprises a unit 322 arranged to determine the available bandwidth for the distribution channels 319 in the visited network 103. In one example, the bandwidth determining unit 322 is arranged to determine an average bandwidth for the distribution channels 319 in the visited network 103. In an alternative example, the bandwidth determining unit 322 is arranged to determine the bandwidth for each new distribution channel 319 which is to set up to a new remote user unit. Further, the bandwidth determining unit 322 may be arranged to recurrently update the bandwidth determination during distribution. The control unit 317 is in one example arranged to compare the available bandwidth determined by the bandwidth determining unit 322 for each distribution channel 319 with the bandwidth of the IPTV channel bit stream which is to be distributed over said distribution channel. If the available bandwidth is lower than the bandwidth of the IPTV channel which is to be distributed by means of said distribution channel 319, the control unit 317 is arranged to feed the bit stream to a compressing unit 323 arranged to compress the data stream so as to be in line with the available bandwidth. In one example, the compressing unit 323 is arranged to provide transcoding. The transcoding involves in one example changing codec and/or bandwidth for the data stream. The transcoding is for example provided by connecting a decoder and an encoder back-to-back. In practice, the transcoding can be used for lowering the bandwidth of the data stream to the available bandwidth. The transcoding can be provided in an even more effective way to keep quality at a high level and saving CPU power required. The transcoding can then involve encoding and decoding in one step.

In the shown example, the compressing unit 323 is connected to the receiver 316 such that the memory unit 321 is connected to the receiver via the output lines of the compressor unit 323. In an alternative, not illustrated example, the memory unit 321 is directly connected to the receiver 316 so as to receive and store non-compressed data. In a not shown example, a second compressing unit is connected to the memory unit so as to compress data stored in the memory 321 before distribution over the distribution channel 319, if the available bandwidth over the distribution channel 319 is not adequate for transmission of the IPTV channel bit stream without compression.

The transponder server 307 comprises a transmitter 324 arranged to transmit feed back information related to the communication of the set of IPTV channels over the communication tunnel 102. In one example, the feed back information comprises information related to which IPTV channels are presently viewed by at least one of the remote users. If one or a plurality of IPTV channels in the exported set of IPTV channels is/are not viewed, the source unit 104 can be arranged to block the transmission of said not viewed IPTV channel(s). In an alternative or complementary example, the feed back information may comprise information related to the available bandwidth over the distribution channels 319. The source unit 104 can than be arranged to perform compression so that the exported set of IPTV channels have bandwidths with a determined relation to the available bandwidths over the distribution channels 319. In one example, the bandwidth of each IPTV channel transmitted over the communication tunnel is arranged to equal the available bandwidth over the distribution channels. In one example, the feed-back information relates to the an average bandwidth, or the like, and accordingly compression can be performed on said average basis. Alternatively, the feed-back information relates to the individual distribution channels 319, in which case the bandwidths of the exported IPTV channels can be compressed so as to be individually adapted for the distribution channel 319 over which the respective IPTV channel is to be distributed.

In one example, the transponder server 307 is substantially formed in software. Alternatively, some or all of the functions described in relation to Fig 3 are formed in hardware.

In Fig. 4, a method for providing remote access to a first IPTV network comprises generally a step 425 in which a set of IPTV channels of said first IPTV network is exported to a communication unit characteristically out of reach for the first IPTV network. In the example shown in Fig 4, at least some of the television programs included in the exported set of IPTV channels is/are stored in a memory unit of the communication unit in a storing step 426. Those stored television programs can then be watched afterwards on demand. Further, in a next step 427, at least the following information is determined from a selection signal provided in the communication unit from a new remote user unit.
1) The origin of the selection signal is determined, i.e. the location of the remote user unit from which the selection signal originates is determined,
2) The IPTV channel for viewing requested by means of the selection signal is determined.

Thereafter, a step 428 of setting up one separate distribution channel to said remote user unit in accordance with the selection signals is performed. Each remote user unit has one separate session (distribution channel) to the transponder server. When the distribution channel to the new remote user unit has been set-up, a step 429 of distribution over the distribution channel can be performed in accordance with the request of the selection signal. In practice, the steps 425-429 are not performed in a sequence. For example, the step of exporting the IPTV channel set is continuously ongoing. In one example, the IPTV channel set is exported in real time. If the communication unit is arranged to store one or more television program, this is also a continuously ongoing process.

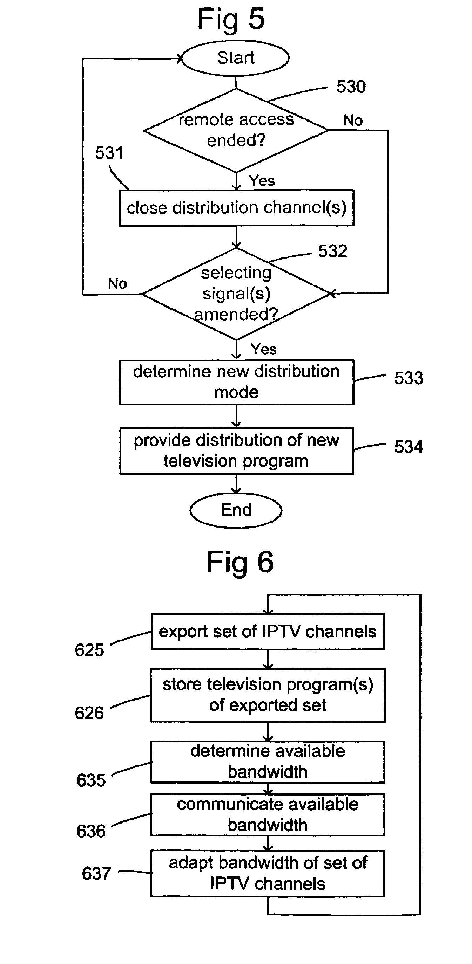

In Fig. 5, a process of continuously handling selection signals from one or a plurality of remote user units is generally described. In a step 530, it is determined whether any of the remote user units has ended the remote access to the first IPTV network. In one example, the content of the selection signal received at the communication unit indicates that the remote access has ended. In an alternative example, the absence of reception of the selection signal at the communication unit indicates that the remote access has ended. If it has been determined that the remote access has ended, the distribution channel to that remote user unit, which has ended the access is closed in a closing step 531. In a step 532, it is determined whether any of the remote user units has changed the choice of IPTV channels. If not, the process is starting over from the beginning with step 530. If on the other hand, any of the remote user units has changed the choice of IPTV channel, an appropriate distribution mode is in the shown example determined for the new IPTV channel in a step 533. The choice of appropriate distribution modes over the distribution channels has been described above. Thereafter, distribution is provided of the new IPTV channel in a step 534.

In Fig 6, information is communicated also in the direction from the communication unit to the first IPTV network, said information relating to the distribution of television programs to the remote users. The characteristics of said set of IPTV channels is then adapted before export to the communication unit in accordance with the information related to the distribution of television programs. In the example of Fig 6, the available bandwidth over the distribution channels is determined in a step 635. In one example, the bandwidth for each distribution channel is determined. In an alternative example, an average bandwidth is determined based on the available bandwidths over the individual distribution channels. Alternatively, another measure of the available bandwidth is determined, such as the bandwidth of that distribution channel having the highest bandwidth. Irrespectively of how the available bandwidth is determined, the determined available bandwidth is communicated to the first IPTV network in a communication step 636. The first IPTV network then adapts the bandwidths of the set of IPTV channels in an adaption step 637 before export of the set of IPTV channels in step 625.

In Fig 7, another example is illustrated wherein information is communicated also in the direction from the communication unit to the first IPTV network so as to adapt the characteristics of said set of IPTV channels before export to the communication unit. In the example of Fig 7, it is determined which IPTV channels of the herein described set of IPTV channels available for export to the communication unit are presently chosen by means of the selection signals from the remote user units in a step 738. Also IPTV channels which are presently being stored in the communication unit are to be regarded as chosen IPTV channels. Information identifying those IPTV channels presently not chosen is then communicated to the first IPTV network in a communication step 739. The first IPTV network then blocks those presently not chosen IPTV channels in a step 740 and exports the set of IPTV channels excluding the blocked IPTV channels in step 725.

## Claims

1. Communication unit (107; 307) for communication of IPTV channels from a first IPTV network to a plurality of remote user units (110, 210), said communication unit comprising a receiver (316) arranged to receive a set of IPTV channels provided over a communication tunnel (102) from the first IPTV network, wherein the communication unit comprises a distribution channel set up unit (320) arranged to set up one separate distribution channel (319) to each remote user unit (110; 210) so as to distribute one of the IPTV channels in said set of IPTV channels over each distribution channel (319) and a transmitter (324), **characterized in that** the transmitter (324) is arranged to transmit feed-back information over the communication tunnel (102) to the first IPTV network for adapting the characteristics of the IPTV channels received over the communication tunnel, the feed-back information related to the distribution of the received set of IPTV channels and comprising information related to the available bandwidth over the distribution channels (319).

2. Communication unit according to claim 1, comprising a control unit (317) arranged to
- receive one selector signal from each user unit, said selector signal indicating a chosen IPTV channel, and
- control the distribution channel set up unit (320) so as to distribute the chosen IPTV channel indicated by the respective selector signal to each remote user unit (110).

3. Communication unit according to claim 1 or 2, wherein the control unit (317) is arranged to determine a communication mode over each distribution channel (319) based on one or a plurality of preset criteria.

4. Communication unit according to any of the preceding claims, comprising a memory unit (319) arranged to store at least some television programs of the set of IPTV channels.

5. Communication unit according to claim 4 referring to claim 2, wherein the selector signal from at least one of the user units indicates a video mode, in which video mode one of the television programs stored in the memory unit (319) is selected, and wherein the control unit (317) is arranged to control distribution in accordance therewith.

6. IPTV system comprising
- a first IPTV network (101) arranged to export a set of IPTV channels of said first IPTV network (101) to a communication unit (107) by means of a communication tunnel (102), and
- a plurality of remote user units (110) each arranged to transmit a selector signal to said communication unit so as to select one IPTV channel from said set of IPTV channels,
wherein said communication unit (107) comprises a distribution channel set up unit (320) arranged to set up one separate distribution channel (319) to each remote user unit (110; 210) based on the information in each respective selector signal so as to distribute the selected IPTV channel over the corresponding distribution channel (319), and in that it comprises a transmitter (324) arranged to transmit feed-back information over the communication tunnel (102) to the first IPTV network, **characterized in that** the feed-back information is related to the distribution of the received set of IPTV channels and comprising information related to the available bandwith over the distribution channels (319) and **in that** a source unit in the first IPTV network is arranged to perform compression so that the exported set of IPTV channels have bandwidths with a determined relation to the available bandwidths over the distribution channels (319)

7. IPTV system, according to claim 6, wherein the distribution channel (119) is provided over a second network (103).

8. IPTV system, according to claim 7, wherein the second network (103) is a broadband data network.

9. IPTV system according to any of the claims 6 to 8, wherein the communication tunnel (102) is provided over the Internet.

10. IPTV system according to any of the claims 6 to 9 wherein the communication tunnel (102) is encrypted.

11. IPTV system according to any of the claims 6 to 10, wherein the communication unit (107; 307) comprises a memory arranged to store at least some television programs of the exported set of IPTV channels, and in that said remote user unit (110) comprises means for selecting one of the stored television programs.

12. Method for providing remote access to a first IPTV network, comprising the steps of
- exporting a set of IPTV channels from said first IPTV network to a communication unit,
- setting up a distribution channel (319) between said communication unit and each remote user unit (110), in a group of remote user units,
- distributing one chosen television program of the exported set of IPTV channels to each remote user unit (110),
- communicating feed-back information from the communication unit (107; 307) to the first IPTV network, said feed-back information relating to the distribution of television programs to the remote users and comprising information related to the available bandwidth over the distribution channels (319) ;and
- adapting the characteristics of said set of IPTV channels before export to the communication unit in accordance with the information related to the distribution of television programs.

13. Method according to claim 12, further comprising the steps of
- providing a selection signal from each remote user unit to the communication unit, said selection signal indicating said chosen television program, and
- performing the step of setting up the distribution channel in response to said selection signal.

14. Method according to claim 12, wherein the information relating to the distribution of television programs to the remote users comprises information denoting IPTV channels which are currently not distributed to the remote user units, and wherein the adapting of the characteristics involves removing said denoted IPTV channels from the exported set of IPTV channels.

15. Computer programme comprising a programme code for performing the following steps in a communication unit (107; 307):
- receiving a set of IPTV channels from a first IPTV network, and
- setting up one separate distribution channel (319) to a plurality of remote user units (110, 210) so as to distribute one of the IPTV channels in said set of IPTV channels over each distribution channel (319),
- transmitting feed-back information to the first IPTV network for adapting the characteristics of the IPTV channels received over the communication tunnel, the feed-back information related to the distribution of the received IPTV channels and comprising information related to the available bandwidth over the distribution channels (319);
when said computer programme is run on a computer.

16. Computer programme according to claim 15, comprising a programme code for performing steps of:
- receiving one selector signal from each user unit, said selector signal indicating a chosen IPTV channel, and
- controlling the distribution so as to distribute the chosen IPTV channel indicated by the respective selector signal to each remote user unit (110)
when said computer programme is run on a computer.

17. Computer programme product comprising a program code according to claim 15 or 16 stored on a, by a computer readable, media.

## Patentansprüche

1. Kommunikationseinheit (107, 307) zur Kommunikation von IPTV-Kanälen von einem ersten IPTV-Netz an eine Mehrzahl dezentraler Benutzereinheiten (110, 210), wobei die Kommunikationseinheit einen Empfänger (316) umfasst, der zum Empfang einer Reihe von IPTV-Kanälen angeordnet ist, die über einen Kommunikationstunnel (102) vom ersten IPTV-Netz bereitgestellt werden, wobei die Kommunikationseinheit eine Verteilungskanal-Einrichtungseinheit (320), die derart angeordnet ist, dass sie einen getrennten Verteilungskanal (319) an jede dezentrale Benutzereinheit (110, 210) einrichtet, um einen der IPTV-Kanäle in der Reihe IPTV-Kanäle über jeden Verteilungskanal (319) verteilt, und einen Sender (324) umfasst, **dadurch gekennzeichnet, dass** der Sender (324) derart angeordnet ist, dass er Rückmeldungsdaten über den Kommunikationstunnel (102) an das erste IPTV-Netz sendet, um die Eigenschaften der über den Kommunikationstunnel empfangenen IPTV-Kanäle anzupassen, wobei die Rückmeldungdaten die Verteilung der empfangenen Reihe von IPTV-Kanälen betreffen und Daten über die in den Verteilungskanälen verfügbaren Bandbreite umfassen.

2. Kommunikationseinheit nach Anspruch 1, umfassend eine Steuereinheit (317), die derart angeordnet ist, dass
- sie ein Selektorsignal von jeder Benutzereinheit empfängt, wobei das Selektorsignal einen ausgewählten IPTV-Kanal angibt, und
- die Einrichtungseinheit (320) steuert, um den vom jeweiligen Selektorsignal angegebenen ausgewählten IPTV-Kanal an jede dezentrale Benutzereinheit (110) verteilt.

3. Kommunikationseinheit nach Anspruch 1 oder 2, wobei die Steuereinheit (317) derart angeordnet ist, dass sie einen Kommunikationsmodus über jeden Verteilungskanal (319) auf der Grundlage einer Mehrzahl voreingesteller Kriterien bestimmt.

4. Kommunikationseinheit nach einem der vorstehenden Ansprüche, umfassend eine zur Speicherung mindestens einiger Fernsehprogramme der Reihe von IPTV-Kanälen angeordnete Speichereinheit (319).

5. Kommunikationseinheit nach Anspruch 4 unter Bezugnahme auf Anspruch 2, wobei das Selektorsignal aus mindestens einer der Benutzereinheit einen Videomodus beinhaltet, in dem eines der in der Speichereinheit (319) gespeicherten Fernsehprogramme ausgewählt wird, und wobei die Steuereinheit (317) derart angeordnet ist, dass sie die Verteilung dementsprechend steuert.

6. IPTV-System, umfassend:
- ein erstes IPTV-Netzwerk (101), das zum Exportieren einer Reihe von IPTV-Kanälen des ersten IPTV-Netzes (101) an eine Kommunikationseinheit (107) über einen Kommunikationstunnel (102) angeordnet ist,
- eine Mehrzahl dezentraler Benutzereinheiten (110), die jeweils zum Senden eines Selektorsignals an die Kommunikationseinheit angeordnet ist, um einen IPTV-Kanal aus der Reihe IPTV-Kanäle auszuwählen,
wobei die Kommunikationseinheit (107) eine Verteilungskanal-Einrichtungseinheit (320), die derart angeordnet ist, dass sie anhand der Daten in jedem jeweiligen Selektorsignal einen getrennten Verteilungskanal (319) an jede dezentrale Benutzereinheit (110, 210) einrichtet, um den ausgewählten IPTV-Kanal über den entsprechenden Verteilungskanal (319) verteilt, und dadurch, dass es einen Sender (324) umfasst, der zur Sendung von Rückmeldungsdaten über den Kommunikationstunnel (102) an das erste IPTV-Netz angeordnet ist,
**dadurch gekennzeichnet, dass** die Rückmeldungdaten die Verteilung der empfangenen Reihe von IPTV-Kanälen betreffen und Daten über die in den Verteilungskanälen (319) verfügbaren Bandbreite umfassen, und dass eine Quelleinheit im ersten IPTV-Netz derart angeordnet ist, dass sie eine Kompression ausführt, damit die exportierte Reihe von IPTV-Kanälen Brandbreiten aufweist, die in einem bestimmten Verhältnis zu den in den Verteilungskanälen (319) verfügbaren Bandbreiten stehen.

7. IPTV-System nach Anspruch 6, wobei der Verteilungskanal (119) über ein zweites Netz (103) bereitgestellt wird.

8. IPTV-System nach Anspruch 7, wobei das zweite Netz (103) ein Breitband-Datennetz ist.

9. IPTV-System nach einem der Ansprüche 6 - 8, wobei der Kommunikationstunnel (102) über das Internet bereitgestellt wird.

10. IPTV-System nach einem der Ansprüche 6 - 9, wobei der Kommunikationstunnel (102) verschlüsselt ist.

11. IPTV-System nach einem der Ansprüche 6 - 10, wobei die Kommunikationseinheit (107, 307) einen Speicher umfasst, der zur Speicherung mindestens einiger der Fernsehprogramme der exportierten Reihe von IPTV-Kanälen angeordnet ist, und die dezentrale Benutzereinheit (110) Mittel zum Auswählen eines der gespeicherten Fernsehprogramme umfasst.

12. Verfahren zur Gewährung von Fernzugriff auf ein erstes IPTV-Netz, umfassend die nachfolgenden Schritte
- Exportieren einer Reihe von IPTV-Kanälen vom ersten IPTV-Netz an eine Kommunikationseinheit,
- Einrichten eines Verteilungskanals (319) zwischen der Kommunikationseinheit und jeder dezentralen Benutzereinheit (110) in einer Gruppe dezentraler Benutzereinheiten,
- Verteilen eines ausgewählten Fernsehprogramms der exportierten Reihe von IPTV-Kanälen an jede dezentrale Benutzereinheit (110),
- Kommunizieren von Rückmeldungsdaten von der Kommunikationseinheit (107, 307) an das erste IPTV-Netzwerk, wobei die Rückmeldungsdaten die Verteilung von Fernsehprogrammen an die dezentralen Benutzer betreffen und Daten über die in den Verteilungskanälen (319) verfügbare Bandbreite umfassen, und
- Anpassen der Eigenschaften der Reihe von IPTV-Kanälen vor dem Exportieren an die Kommunikationseinheit je nach den Daten über die Verteilung von Fernsehprogrammen.

13. Verfahren nach Anspruch 12, ferner umfassend die nachfolgenden Schritte:
- Bereitstellen eines Selektorsignals von jeder Benutzereinheit an die Kommunikationseinheit, wobei das Selektorsignal das ausgewählte Fernsehprogramm angibt, und
- Einrichten des Verteilungskanals als Reaktion auf das Auswahlsignal.

14. Verfahren nach Anspruch 12, wobei die Daten über die Verteilung von Fernsehprogrammen an dezentrale Benutzer Daten umfassen, aus denen IPTV-Kanäle hervorgehen, die derzeit an die dezentralen Benutzereinheiten nicht verteilt werden, und wobei die Anpassung de Eigenschaften die Entfernung der angegebenen IPTV-Kanäle aus der exportierten Reihe von IPTV-Kanälen beinhaltet.

15. Computerprogramm, umfassend einen Programmcode zur Ausführung der nachfolgenden Schritte in einer Kommunikationseinheit (107, 307):
- Empfangen einer Reihe von IPTV-Kanälen von einem ersten IPTV-Netz und
- Einrichten eines getrennten Verteilungskanals (319) an eine Mehrzahl dezentraler Benutzereinheiten (110, 210) einrichtet, um einen der IPTV-Kanäle in der Reihe IPTV-Kanäle über jeden Verteilungskanal (319) zu verteilen,
- Senden von Rückmeldungsdaten von der Kommunikationseinheit zur Anpassung der Eigenschaften der über den Kommunikationstunnel empfangenen IPTV-Kanäle, wobei die Rückmeldungsdaten die Verteilung der empfangenen IPTV-Kanäle betreffen und Daten über die in den Verteilungskanälen (319) verfügbare Bandbreite umfassen,
wenn das Computerprogramm auf einem Rechner ausgeführt wird.

16. Computerprogramm nach Anspruch 15, umfassend einen Programmcode zur Ausführung der nachfolgenden Schritte:
- Empfangen eines Selektorsignals von jeder Benutzereinheit, wobei das Selektorsignal einen ausgewählten IPTV-Kanal angibt, und
- Steuern der Einrichtungseinheit, um den vom jeweiligen Selektorsignal angegebenen ausgewählten IPTV-Kanal an jede dezentrale Benutzereinheit (110) zu verteilen,
wenn das Computerprogramm auf einem Rechner ausgeführt wird.

17. Computerprogrammprodukt, umfassend einen Programmcode nach Anspruch 15 oder 16, der auf einem computerlesbaren Datenträger gespeichert ist.

## Revendications

1. Unité de communication (107 ; 307) pour la communication de canaux IPTV, d'un premier réseau IPTV à une pluralité d'unités d'utilisateur distantes (110, 210), ladite unité de communication comprenant un récepteur (316) agencé de manière à recevoir un ensemble de canaux IPTV fourni sur un tunnel de communication (102) à partir du premier réseau IPTV, dans lequel l'unité de communication comporte une unité de configuration de canaux de distribution (320) agencée de manière à configurer un canal de distribution individuel (319) au niveau de chaque unité d'utilisateur distante (110 ; 210) de manière à distribuer l'un des canaux IPTV dudit ensemble de canaux IPTV sur chaque canal de distribution (319), et un émetteur (324), **caractérisé en ce que** l'émetteur (324) est agencé de manière à transmettre des informations de rétroaction sur le tunnel de communication (102), au premier réseau IPTV, en vue d'adapter les caractéristiques des canaux IPTV reçus sur le tunnel de communication, les informations de rétroaction étant connexes à la distribution de l'ensemble reçu de canaux IPTV et comprenant des informations connexes à la bande passante disponible sur les canaux de distribution (319).

2. Unité de communication selon la revendication 1, comprenant une unité de commande (317) agencée de manière à :
- recevoir un signal de sélecteur à partir de chaque unité d'utilisateur, ledit signal de sélecteur indiquant un canal IPTV choisi ; et
- commander l'unité de configuration de canaux de distribution (320) de manière à distribuer le canal IPTV choisi indiqué par le signal de sélecteur respectif à chaque unité d'utilisateur distante (110).

3. Unité de communication selon la revendication 1 ou 2, dans lequel l'unité de commande (317) est agencée de manière à déterminer un mode de communication sur chaque canal de distribution (319), sur la base d'un critère prédéfini ou d'une pluralité de critères prédéfinis.

4. Unité de communication selon l'une quelconque des revendications précédentes, comprenant une unité de mémoire (319) agencée de manière à stocker au moins certains programmes de télévision de l'ensemble de canaux IPTV.

5. Unité de communication selon la revendication 4, en référence à la revendication 2, dans lequel le signal de sélecteur en provenance d'au moins l'une des unités d'utilisateur indique un mode vidéo dans lequel est sélectionné l'un des programmes de télévision stockés dans l'unité de mémoire (319), et dans lequel l'unité de commande (317) est agencée de manière à commander la distribution en conformité avec celui-ci.

6. Système IPTV comprenant :
- un premier réseau IPTV (101) agencé de manière à exporter un ensemble de canaux IPTV dudit premier réseau IPTV (101) vers une unité de communication (107), au moyen d'un tunnel de communication (102) ; et
- une pluralité d'unités d'utilisateur distantes (110), chacune agencée de manière à transmettre un signal de sélecteur à ladite unité de communication, de façon à sélectionner un canal IPTV dudit ensemble de canaux IPTV ;
dans lequel ladite unité de communication (107) comporte une unité de configuration de canaux de distribution (320) agencée de manière à configurer un canal de distribution individuel (319), au niveau de chaque unité d'utilisateur distante (110 ; 210), sur la base des informations contenues dans chaque signal de sélecteur respectif, de manière à distribuer le canal IPTV sélectionné sur le canal de distribution correspondant (319), et **caractérisé en ce qu'**il comporte un émetteur (324) agencé de manière à transmettre des informations de rétroaction sur le tunnel de communication (102), au premier réseau IPTV, **caractérisé en ce que** les informations de rétroaction sont connexes à la distribution de l'ensemble reçu de canaux IPTV, et comprenant des informations connexes à la bande passante disponible sur les canaux de distribution (319), et **en ce qu'**une unité source dans le premier réseau IPTV est agencée de manière à mettre en oeuvre une compression, de sorte que l'ensemble exporté de canaux IPTV présente des bandes passantes ayant une relation déterminée avec les bandes passantes disponibles sur les canaux de distribution (319).

7. Système IPTV selon la revendication 6, dans lequel le canal de distribution (119) est fourni sur un second réseau (103).

8. Système IPTV selon la revendication 7, dans lequel le second réseau (103) est un réseau de données à large bande.

9. Système IPTV selon l'une quelconque des revendications 6 à 8, dans lequel le tunnel de communication (102) est fourni sur Internet.

10. Système IPTV selon l'une quelconque des revendications 6 à 9, dans lequel le tunnel de communication (102) est chiffré.

11. Système IPTV selon l'une quelconque des revendications 6 à 10, dans lequel l'unité de communication (107 ; 307) comporte une mémoire agencée de manière à stocker au moins certains programmes de télévision de l'ensemble exporté de canaux IPTV, et **caractérisé en ce que** ladite unité d'utilisateur distante (110) comprend un moyen pour sélectionner l'un des programmes de télévision stockés.

12. Procédé de fourniture d'accès distant à un premier réseau IPTV, comprenant les étapes ci-dessous consistant à :
- exporter un ensemble de canaux IPTV, dudit premier réseau IPTV vers une unité de communication ;
- configurer un canal de distribution (319) entre ladite unité de communication et chaque unité d'utilisateur distante (110), dans un groupe d'unités d'utilisateur distantes ;
- distribuer un programme de télévision choisi de l'ensemble exporté de canaux IPTV à chaque unité d'utilisateur distante (110) ;
- communiquer des informations de rétroaction, de l'unité de communication (107 ; 307) au premier réseau IPTV, lesdites informations de rétroaction étant connexes à la distribution de programmes de télévision aux utilisateurs distants, et comprenant des informations connexes à la bande passante disponible sur les canaux de distribution (319) ; et
- adapter les caractéristiques dudit ensemble de canaux IPTV avant toute exportation vers l'unité de communication, selon les informations connexes à la distribution de programmes de télévision.

13. Procédé selon la revendication 12, comprenant en outre les étapes ci-dessous consistant à :
- fournir un signal de sélection, de chaque unité d'utilisateur distante à l'unité de communication, ledit signal de sélection indiquant ledit programme de télévision choisi ; et
- mettre en oeuvre l'étape de configuration du canal de distribution en réponse audit signal de sélection.

14. Procédé selon la revendication 12, dans lequel les informations connexes à la distribution de programmes de télévision aux utilisateurs distants comportent des informations indiquant des canaux IPTV qui ne sont pas à cet instant distribués aux unités d'utilisateur distantes, et dans lequel l'adaptation des caractéristiques consiste à supprimer lesdits canaux IPTV indiqués de l'ensemble exporté de canaux IPTV.

15. Programme informatique comprenant un code de programme destiné à mettre en oeuvre les étapes ci-dessous, dans une unité de communication (107 ; 307), consistant à :
- recevoir un ensemble de canaux IPTV à partir d'un premier réseau IPTV ; et
- configurer un canal de distribution individuel (319) sur une pluralité d'unités d'utilisateur distantes (110, 210), de manière à distribuer l'un des canaux IPTV dudit ensemble de canaux IPTV sur chaque canal de distribution (319) ;
- transmettre des informations de rétroaction au premier réseau IPTV en vue d'adapter les caractéristiques des canaux IPTV reçus sur le tunnel de communication, les informations de rétroaction étant connexes à la distribution des canaux IPTV reçus, et comprenant des informations connexes à la bande passante disponible sur les canaux de distribution (319) ;
lorsque ledit programme informatique est exécuté sur un ordinateur.

16. Programme informatique selon la revendication 15, comprenant un code de programme destiné à mettre en oeuvre les étapes ci-dessous consistant à :
- recevoir un signal de sélecteur à partir de chaque unité d'utilisateur, ledit signal de sélecteur indiquant un canal IPTV choisi ; et
- commander la distribution de façon à distribuer le canal IPTV choisi, indiqué par le signal de sélecteur respectif, à chaque unité d'utilisateur distante (110) ;
lorsque ledit programme informatique est exécuté sur un ordinateur.

17. Produit-programme informatique comprenant un code de programme selon la revendication 15 ou 16, stocké sur et par un support lisible par ordinateur.
